# EUROPEAN PATENT APPLICATION

(11) **EP 4 387 166 A1**
(43) Date of publication of application: **19.06.2024**
(21) Application number: 22306876.8
(22) Date of filing: 14.12.2022
(51) Int. Cl.: H04L 9/40, H04L 9/32, H04L 65/611, H04L 65/612, H04L 67/104, H04N 21/845

(54) **METHOD OF CHECKING SEGMENTS IN A PEER-TO-PEER NETWORK**

(71) Applicant: Streamroot, 75001 Paris (FR)
(72) Inventor: STORELLI, Alexandre, 75012 PARIS (FR); MUKAM, Igor, 75020 PARIS (FR)
(74) Representative: Marks & Clerk LLP

(57) **Abstract**

A method comprising: at a first peer, receiving (202) input data sent by a second peer connected to the first peer through a peer-to-peer network, wherein the input data comprises: a hash of a media segment, and metadata associated to a playback position of the media segment; at the first peer, receiving (204) a digital signature sent by the second peer, wherein the digital signature results from signing the input data with a private key; checking validity (206) of the digital signature from the input data and a public key; and discarding (208) the media segment whenever the signature is found to be invalid during the checking.

## Description

### TECHNICAL FIELD

The present disclosure relates to data streaming in "peer-to-peer" (P2P) networks.

### BACKGROUND

"Streaming" designates a method wherein a client device plays a data stream (for instance an audio or a video stream) while said data stream is recovered from the Internet. This contrasts with downloading, which requires the client device to recover all the data of the audio or video content before being able to play it.

In the case of streaming, storing the data stream at the client device is temporary and partial, since data is continuously downloaded in a buffer of the client (typically in a random-access memory of the client device), analyzed on-the-fly by a processor of the client device and quickly transferred to an output interface (a screen and/or loudspeakers) and then replaced with new data.

The data stream is provided by at least one server referred to as "content delivery network", or CDN. The client which desires to play the data stream sends a request to recover first segments therefrom (a segment means a data block of the content, corresponding generally to a few seconds of playback). When there is a sufficient amount of data in the buffer, the playback starts. In the background, the stream is continuously downloaded in order to uninterruptedly supply the buffer with the remaining part of the data stream.

However, it is noticed that this approach has limits if a great number of client devices desire to play the same content simultaneously: the server is found to be saturated, being incapable of providing the content at a sufficient rate for playing to be fluid, and jerks occur.

Recently, an alternative strategy based on "peer-to-peer" (P2P) has been suggested, in which each client device acts as a server for other client devices: they are called peers. A peer which has started playing the data stream can forward to others peers segments it has already received, and so on. This strategy is for instance described in WO 2012/154287.

However, delivery failures may occur in the P2P network formed by the peers. A scenario of delivery failure is when the data transmitted over the P2P network is corrupted, due to network glitches or due to malicious peer activity. For instance, a malicious peer may corrupt the content of a media segment before sending it to another peer. As a consequence, a client device ultimately receiving the corrupted media segment could play incorrect or inappropriate content.

### SUMMARY

A goal of the present disclosure is to overcome the issue identified above.

It is therefore proposed, according to a first aspect, a method comprising:
- at a first peer, receiving input data sent by a second peer connected to the first peer through a peer-to-peer network, wherein the input data comprises: a hash of a media segment and metadata associated to a playback position of the media segment;
- at the first peer, receiving a digital signature sent by the second peer, wherein the digital signature results from signing the input data with a private key;
- checking validity of the digital signature from the input data and a public key; and
- discarding the media segment whenever the signature is found to be invalid during the checking.

The method according to the first aspect may further comprise the optional features listed below, taken alone or in combination whenever possible.

Preferably, the metadata comprises a download address of the media segment.

Preferably, the metadata comprises a string resulting from masking a download address of the media segment, wherein the download address of the media segment comprises a token specifically assigned to a client device having requested the media segment, and the token is not derivable from the string due to the masking.

Preferably, the string is another download address of the media segment.

Preferably, the metadata comprises a size of the media segment.

Preferably, the method further comprises sending a request to a server storing the public key, and receiving the public key from the server in response to the request.

Preferably, the server has signed the input data with the private key, thereby producing the digital signature.

Preferably, the server is a CDN server where the media segment is available for download.

Preferably, the public key is associated with a reference private key which has been used by the server for digitally signing many data respectively related to different media segments of a data stream.

Preferably, discarding the media segment comprises applying at least one of the following security measures: preventing the media segment to be transferred by the second peer to the first peer; preventing the input media segment to be played by the first peer; preventing the input media segment to be transferred by the first peer to another peer.

Preferably, the method further comprises:
- at the first peer, receiving a second input digital signature from the second peer, wherein the second digital signature results from signing second input data with a second private key different from the private key, the second input data comprising: a second hash of a second media segment, wherein the second media segment is to be played after the media segment, and metadata associated to a playback position of the second media segment;
- at the first peer, checking validity of the second digital signature using a second public key associated with the second private key,
- discarding the second input digital signature whenever the signature is found to be invalid during the checking.

A second aspect of this disclosure is a computer program product comprising instructions which, when the program is executed by a computer, cause the computer to carry out the steps of the method according to the first aspect.

A third aspect of this disclosure a non-transitory computer-readable medium comprising code instructions for causing a computer to perform the method according to the first aspect.

A fourth aspect of the present disclosure is a peer comprising:
- a network interface for receiving
   - input data sent by a second peer connected to the peer through a peer-to-peer network, wherein the input data comprises: a hash of a media segment, and metadata associated to a playback position of the media segment,
   - a digital signature sent by the second peer, wherein the digital signature results from signing the input data with a private key,
- a computer configured to check validity of the digital signature from the input data and a public key and discarding the media segment whenever the signature is found to be invalid during the check.

A fifth aspect of the present disclosure is a system comprising the peer according to the fourth aspect and a server configured to sign the input data with the private key, thereby producing the digital signature.

### DESCRIPTION OF THE DRAWINGS

The above and other objects, features and advantages of this invention will be apparent in the following detailed description of an illustrative embodiment thereof, which is to be read in connection with the accompanying drawings wherein:
- Fig. 1 represents a network architecture according to an embodiment.
- Fig. 2 schematically represents a peer-to-peer network according to an embodiment.
- Fig. 3 schematically shows a client device according to an embodiment.
- Fig. 4 schematically shows a CDN according to an embodiment.
- Fig. 5 shows steps of a method according to an embodiment.
- Fig. 6 shows steps of another method according to an embodiment

### DETAILED DESCRIPTION OF A PREFERRED EMBODIMENT

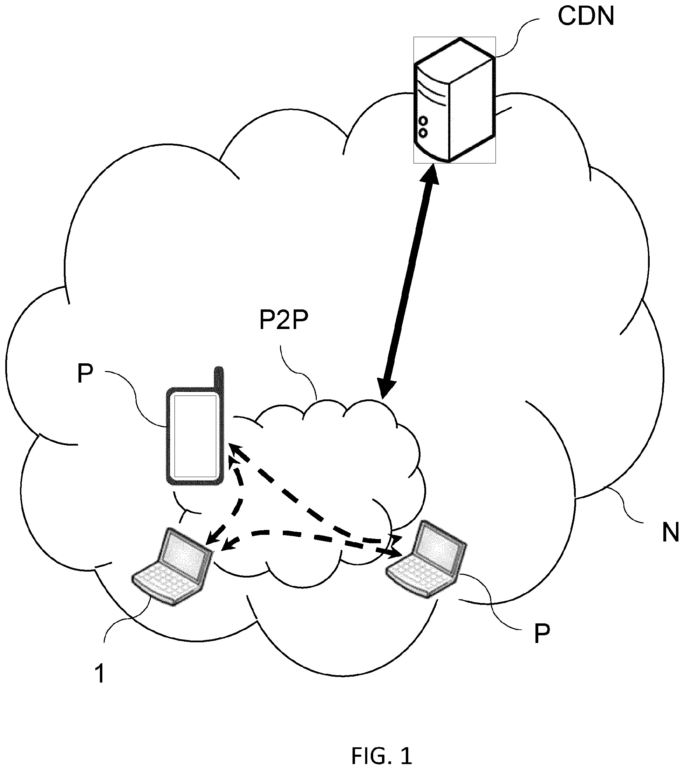

Referring to **figure 1****,** a network N a peer-to-peer network, referred to in the following as "P2P network", and a CDN (Content Delivery Network).

As explained in the background section, the P2P network comprises client devices acting as peers. A peer can download media segments of a data stream stored by the CDN, and forward segments it has already downloaded to other peers.

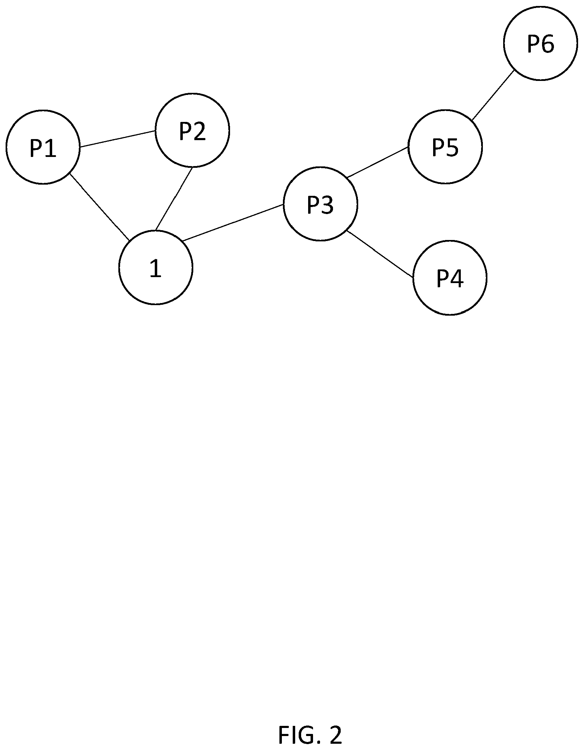

The P2P network is a meshed network, which is not necessarily fully connected. In the present disclosure, two peers are considered to be "connected" in the P2P network to each other whenever a P2P data transfer of data can be directly performed between them, without requiring any further peer. **Figure 2** shows an example of a P2P network partially connected. In this example, client device 1 is connected to peers P1, P2, P3, but not connected to further peers P4, P5, P6.

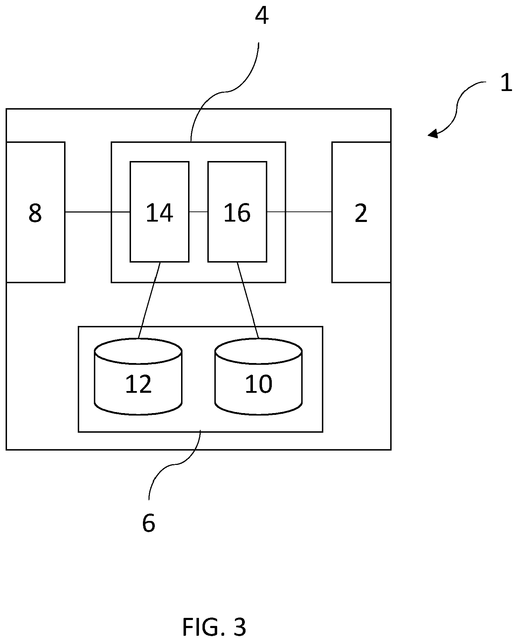

Referring to **figure 3****,** a client device (acting as a peer in the P2P network) comprises a communication interface 2, a peer-to-peer streaming module 4, a memory 6 and an output interface 8.

The communication interface 2 is able to connect to network N such that the client device 1 can receive media segments of the data stream from the CDN or any peer and/or transmit media segments to any peer.

The output interface 8 comprises a screen and/or speakers.

The memory 6 includes a volatile memory such as random-access memory. Two zones are allocated in the volatile memory: a P2P cache 10 and a buffer 12 as described in the introduction of the present disclosure.

The P2P cache 10 is designed to store segments of the data stream in a first format suitable for transfers in the P2P network. This format is not necessarily suitable for playback.

Transferring a segment present in the P2P to the buffer 12 does not imply that said segment is immediately deleted from the P2P cache 10. A copy of the segment may be kept in the P2P cache 10 after playing it, such that the client device 1 can seed it to other peers.

The buffer 12 is designed to store consecutive portions of the data stream. A segment of the data stream is the smallest portion of the data stream which can be transferred from the P2P cache 10 to the buffer 12.

The peer-to-peer streaming module 4 comprises a player 14 and a P2P controller 16.

The player 14 is configured to play portions of the data stream stored in the buffer 12 so as to convert them into signals able to be rendered by the output interface (video signal, audio signal and so on).

Furthermore, player 14 is configured to request further segments of the data stream, whenever an amount of data pending for playback in the buffer 12 is below a threshold. This threshold is actually a configurable parameter of the player.

The P2P controller 16 is actually configured to access the P2P cache 10, interact with the player 14 and interact as well with segment providers (the CDN or a peer). In particular, the P2P controller 16 is configured to adjust the threshold parameter used by the player 14, manage data transfers in the P2P network, and feed the buffer 12 with new segments in response to requests of the player 14.

The P2P controller is further configured to apply treatments to data received from a peer. These treatments will be detailed hereinafter.

In the embodiment shown in figure 3, the player 14 is a component of the peer-to-peer streaming module 4. Alternatively, the peer-to-peer streaming module 4 and the player 14 may be distinct components.

The peer-to-peer streaming module may comprise code instructions forming a computer program which may for instance be a dedicated application, an internet browser in particular HTML5 compatible, an operating system module, The code instructions are adapted to be executed by at least one processor of the client device 1. The player 14 and the P2P controller 16 may be distinct computer program modules. In particular, player 14 may be able to play data coming from other sources than the P2P cache 10. Thus, the P2P controller 16 (and more generally the module 4) may be regarded as a separate component coming in addition to the player 14. Said code instructions may be stored in a non-transitory medium such as the non-volatile memory of memory 6.

As already said above, the network N further comprises a CDN.

A function played by the CDN is providing a data stream in accordance with a given streaming protocol, such as HTTP. The data stream comprises a sequence of media segments which are supposed to be played by a player.

The data stream may comprise media segments of different type: video segments, audio segments, subtitle segments, etc.

Each media segment has a playback position. In the particular case of a data stream taking the form of a MPEG transport stream, the playback position of a segment is represented by a field called PTS (presentation timestamp).

The CDN is the primary source of the data stream, insofar as initially no peer of the P2P network has segments thereof. The data stream may be stored in its entirety by the CDN before it is transferred in the P2P network (in the case of VOD), or may be generated in real time (in the case of live streaming).

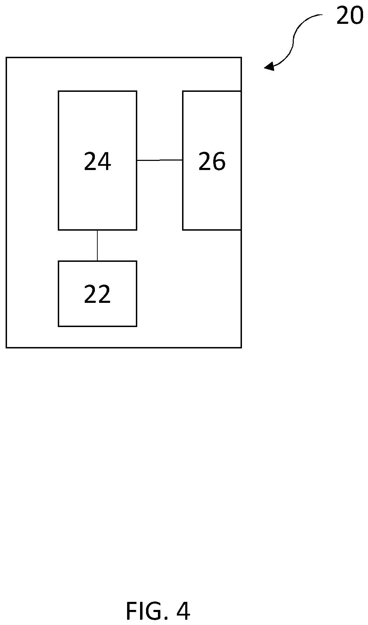

Referring to **figure 4****,** the CDN comprises at least one CDN server 20 comprising a memory 22, a computer 24 and a communication interface 26.

The memory 22 is a non-transitory memory of any type: HDD, SSD, Flash, EEPROM, and so on.

The memory 22 is able to store metadata associated with the playback position of each media segment. In other words, distinct metadata are associated with media segments having different playback positions. The CDN has the ability to determine a media segment from a metadata associated thereto.

In an embodiment, the metadata is or includes a download address of the media segment, i.e. an address where the media segment can be downloaded, for example by peers. The download address may be an URL (Uniform Resource Locator), preferably an HTTP URL. A given media segment may have multiple download addresses.

The download address may comprise a token assigned to a client device having requested the media segment. In practice, a user having subscribed to a service authorizing him/her to download and play the data stream at a given client device may be assigned the token. Other users are not supposed to know this download address or this token.

Here is an example of a download address comprising such a token:
https://cdn.com/s3cr3ts3ssiOnt0k3n/segment_42.ts

This download address is an HTTP URL allowing a user to download a transport stream segment n°42 of a data stream. The string "s3cr3ts3ssiOnt0k3n" is a token assigned to a user using a specific client device, actually in the form of a path. This address is private.

The memory 22 is further able to store private keys.

The computer 24 is configured to apply treatments to media segments of the data stream, including hashing the media segments and digitally signing data with a private key. These treatments will be detailed in the following. The computer 24 may be configured to run a computer program comprising code instructions that causes the computer 24 to perform said treatments. These code instructions may be stored in the memory 22 (which is non transitory).

The communication interface is able to connect to other devices of the network N. The communication interface may be of any (wired or wireless). In any case, the communication interface allows media segments of the data stream to be transferred to other devices requesting them using according download addresses.

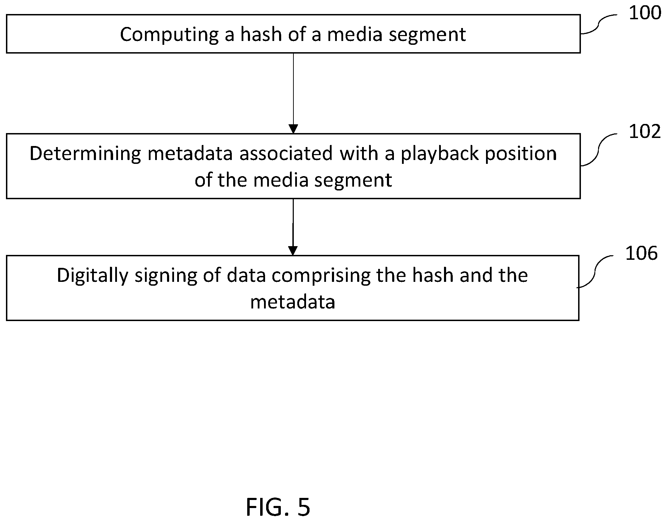

Referring to **figure 5****,** a method performed by the CDN comprises the following steps.

In a step 100, the CDN computes a hash of a media segment stored in the memory 22. The hash is produced by applying a hash function to the media segment. This hash may be a SHA-256 hash. The hash is stored in the memory of the CDN server in association with the media segment.

In a step 102, the CDN determines metadata associated with the playback position of the media segment.

In the present disclosure metadata "associated with the playback position of a media segment" means metadata from which the playback position of a given media segment can be identified directly or indirectly and distinguished from playback positions of other media segments of the same data stream. In other words, distinct metadata are associated with media segments having different playback positions in the data stream. In particular, the CDN has the ability to determine a media segment from a metadata associated thereto.

In a first embodiment, the metadata includes a download address of the media segment which may or may not include a token as described above. In this embodiment, the CDN server merely loads the metadata from its memory. The download address of the media segment is a first embodiment of metadata "associated with the playback position of a media segment", since this address points towards a storage location of the media segment itself where from it can be downloaded.

In a second embodiment, the metadata comprises a string resulting from masking a download address of the media segment, wherein the download address of the media segment comprises a token as described above, i.e. a token that has been specifically assigned to a client device having requested the media segment. Due to the masking, the token is not derivable from the string.

The string may have the format of an URL, such as an HTTP URL. The string may be a functional download address or a non-working download address.

The string does not include any token assigned to a specific client device; it may be user-agnostic.

For example, the masking optionally performed at step 102 may consist in converting the download address
https://cdn.com/s3cr3ts3ssiOnt0k3n/segment_42.ts into the following string:
https://cdn.com/redacted/segment_42.ts

This string has the format of another HTTP URL. The token "s3cr3ts3ssiOnt0k3n" cannot be derivable from the string since it has been replaced by the substring "redacted". Nevertheless, this string remains a second embodiment of metadata "associated with the playback position of a media segment", because the name of the segment has a suffix "_42" sufficient to distinguish the playback position of the considered segment from the playback positions of other segments of the same data stream.

The metadata may further include a size of the media segment. The size is coded on a predefined number of bits. This size may be combined with the download address or with the string described above, by way of a concatenation for example.

In a step 104, the CDN server digitally signs data related to the media segment with a private key, thereby producing a digital signature.

The data in input of the signing process performed at step 104 includes the hash of the media segment computed at step 100 and the metadata associated to a playback position of the media segment determined at step 102. More precisely, the data in input of the signing process may comprise a concatenation of the hash computed at step 100 and of the metadata determined at step 102.

The private key used for signing said data (and thereby obtaining the digital signature) is a secret key belonging to the CDN. It is not supposed to be known by any peer of the P2P network. The private key has previously been generated by the CDN and stored in its memory 22.

The private key is specific to the data stream and may be shared by different media segments of said data stream.

The digital signature resulting from step 106 is stored in the memory 22 in association with the media segment.

From this point on, the media segment is available for download at the CDN. Later, when peers request the media segment, the reference digital signature obtained from the media segment is transmitted to said peers along with the media segment.

The steps above are repeated for many media segments of the data stream, for instance for each media segment of the data stream present in the memory 22 of the CDN.

It is to be noted that the CDN may update the private key associated with the data stream over time. Consequently, metadata of different media segments of the same data stream may be digitally signed using different private key values. This increases the security of the overall method. When the private key is updated, the CDN server keeps track of the different private key values used for signing. In other words, the CDN stores, for any media segment, the private key value that was used for digitally signing metadata of said media segment.

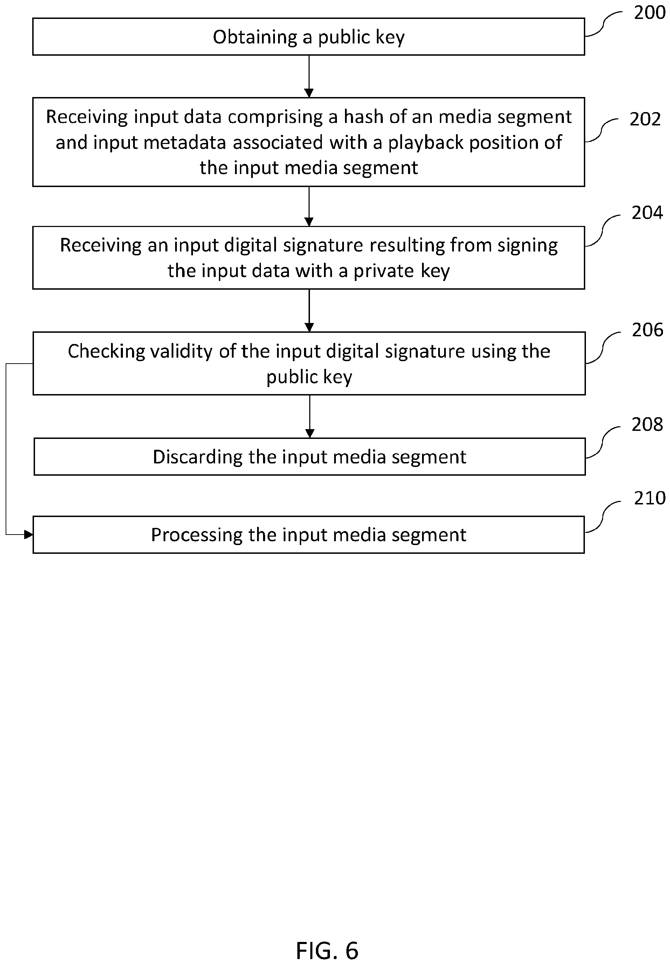

Referring to **figure 6****,** another method, mainly performed by the client device 1, comprises the following steps.

In step 200, the client device 1 obtains a public key associated with the private key which was used by the CDN for producing a reference digital signature as described above in relation with the data stream. The public key and the private key form an asymmetric cryptography key pair.

Preferably, the client device sends a download request of a media segment of the data stream for the first time, and the CDN sends the public key associated with the private key to the client device 1 in response to the download request. The download request may be an HTTP request.

In step 202, the client device 1 acting as a first peer receives input data that has been sent by a second peer the client device 1 is connected to through the P2P network, for example peer P2. The input data is related to an input media segment stored by the second peer.

The input data comprises a hash of the input media segment, and input metadata associated with a playback position of the input media segment.

The input data may have the same format as the data subject to the signing process performed at step 106 by the CDN. In particular, the input metadata has the same format as the metadata stored in the CDN discussed before. In other words, the input metadata may comprise a download address of the input media segment or a string resulting from masking such a download address of the media segment comprising a token as described above. The input metadata may also comprise a size of the input media segment.

In a step 204, the client device 1 further receives an input digital signature which was also sent by the second peer in association with the input data. This input digital signature is presented as resulting from a signing process applied to the input media segment.

Then, in step 206, the client device 1 checks the validity of the input digital signature from the input data and from the obtained public key. The checking performed at step 206 involves a verifying process known in the state. The verifying process processes the input data and the public key, and produces a result indicating whether the input digital signature is found to be valid or invalid.

The result produced at step 206 indicates that the input digital signature is valid whenever both conditions are met:
- the input data matches with reference data related to some reference media stored by the CDN, which means that the input media segment the input data relates to matches in content with the reference media segment stored by the CDN;
- The input digital signature genuinely results from the signing process performed by the CDN as described above, involving the private key of the CDN.

The result produced at step 206 indicates that the input media segment is not valid whenever at least one of the above conditions is not met. This can happen for instance when the input data does not match with any reference data stored by the CDN, for instance because this input data was made up by a malicious peer from a media segment which is not part of the data stream provided by the CDN.

It is to be noted that step 206 can be conducted by the client device 1 either before the input media segment is transferred from the second peer to the client device 1 or after this transfer. If the input digital signature is found to be valid at step 206, the client device 1 considers that the second peer is not malicious, and that the input media segment as stored in the second peer is identical to the reference media segment stored in the CDN. In other words, the client device assumes that the second peer has directly or indirectly obtained the reference media segment from the CDN.

If the input digital signature is found to be valid during the checking, the client device 1 processes the input media segment at step 210 once receiving it. Processing the input segment may comprise allowing the media segment to be transferred into the buffer, such that the player can then play it, or allowing the media segment to be transferred to other peers through the P2P network.

If the input digital signature is found to be invalid at step 206, the client device considers that the second peer is malicious, and that the input media segment as stored in the second peer does not come from the CDN. If the signature is found to be invalid during the checking, then the client device 1 performs step 208.

In step 208, the client device 1 discards the input media segment.

There are different ways of discarding the input media segment at step 208. The client device 1 may apply first security measures preventing the input media segment to be transferred by the second peer to the client device 1 (if not already transferred). The client device 1 may apply second security measures preventing the input media segment to be played by the player 14. The client device 1 apply third security measures preventing the input media segment to be transferred by the first peer to any another peer.

The steps described above in relation with figure 6 may be repeated whenever the client device 1 receives new input data comprising a hash of a new input media segment to be played after the input media segment considered so far, and new metadata associated to a playback position of the new input media segment. It should be noted that a new pair of public/private keys may be generated by the CDN at any time, then transmitted to the client devices at step 204.

## Claims

1. A method comprising:
• at a first peer, receiving (202) input data sent by a second peer connected to the first peer through a peer-to-peer network, wherein the input data comprises:
• a hash of a media segment,
• metadata associated to a playback position of the media segment;
• at the first peer, receiving (204) a digital signature sent by the second peer, wherein the digital signature results from signing the input data with a private key;
• checking validity (206) of the digital signature from the input data and a public key; and
• discarding (208) the media segment whenever the signature is found to be invalid during the checking.

2. The method of claim 1, wherein the metadata comprises a download address of the media segment.

3. The method of claim 1, wherein the metadata comprises a string resulting from masking a download address of the media segment, wherein the download address of the media segment comprises a token specifically assigned to a client device having requested the media segment, and the token is not derivable from the string due to the masking.

4. The method of the preceding claim, wherein the string is another download address of the media segment.

5. The method of any one of the preceding claims, wherein the metadata comprises a size of the media segment.

6. The method of any one of the preceding claims, further comprising:
• sending a request to a server storing the public key; and
• receiving the public key from the server in response to the request.

7. The method of the preceding claim, wherein the server has signed the input data with the private key, thereby producing the digital signature.

8. The method of the preceding claim, wherein the server is a CDN server where the media segment is available for download.

9. The method of any one of claims 6-7, wherein the public key is associated with a reference private key which has been used by the server for digitally signing many data respectively related to different media segments of a data stream.

10. The method of any one of the preceding claims, wherein discarding the media segment comprises applying at least one of the following security measures :
• preventing the media segment to be transferred by the second peer to the first peer,
• preventing the input media segment to be played by the first peer,
• preventing the input media segment to be transferred by the first peer to another peer.

11. The method of any one of the preceding claims, further comprising:
• at the first peer, receiving a second input digital signature from the second peer, wherein the second digital signature results from signing second input data with a second private key different from the private key, the second input data comprising:
• a second hash of a second media segment, wherein the second media segment is to be played after the media segment,
• metadata associated to a playback position of the second media segment,
• at the first peer, checking validity of the second digital signature using a second public key associated with the second private key,
• discarding the second input digital signature whenever the signature is found to be invalid during the checking.

12. A computer program product comprising instructions which, when the program is executed by a computer, cause the computer to carry out the steps of the method of any one of claims 1 to 10.

13. A non-transitory computer-readable medium comprising code instructions for causing a computer to perform the method as claimed in any one of claims 1 to 10.

14. A peer comprising:
• a network interface for receiving:
• input data sent by a second peer connected to the peer through a peer-to-peer network, wherein the input data comprises: a hash of a media segment, and metadata associated to a playback position of the media segment,
• a digital signature sent by the second peer, wherein the digital signature results from signing the input data with a private key,
• a computer configured to: check validity of the digital signature from the input data and a public key; and discard the media segment whenever the signature is found to be invalid during the check.

15. A system comprising:
• the peer of the preceding claim,
• a server configured to sign the input data with the private key, thereby producing the digital signature.
